# EUROPEAN PATENT APPLICATION

(11) **EP 4 495 527 A1**
(43) Date of publication of application: **22.01.2025**
(21) Application number: 22932296.1
(22) Date of filing: 19.10.2022
(51) Int. Cl.: F27B 7/14, F27B 7/28, F27B 9/34, F27D 1/00, F27D 3/08, C22C 19/05, C22C 19/07, C22C 38/00, C22C 38/52, B01J 8/08, C23C 26/00, H01M 4/04, H01M 10/0562

(54) **REACTOR AND REACTOR PART**

(30) Priority: 18.03.2022 JP 2022043883
(71) Applicant: The Japan Steel Works, Ltd., Tokyo 141-0032 (JP)
(72) Inventor: UEDA, Naoki, Tokyo 141-0032 (JP); NAKAMURA, Satoru, Tokyo 141-0032 (JP); OHSAKI, Satoru, Tokyo 141-0032 (JP); YANAGIYA, Takehiko, Tokyo 141-0032 (JP); FURUKI, Kenichi, Tokyo 141-0032 (JP)
(74) Representative: Simmons & Simmons LLP (Munich)
(86) International application number: PCT/JP2022/038942
(87) International publication number: WO 2023/176033

(57) **Abstract**

A reactor component according to an embodiment is used in a reactor for reacting a treated material in an environment in which at least one of the treated material or an atmosphere contains a sulfur component, and is composed of an alloy containing Fe as a main component, and containing 13-35 mass% of Cr and 0-35 mass% in total of Ni and Co.

## Description

### Technical Field

The present disclosure relates to a reactor and a reactor component.

### Background Art

For example, Patent Literature 1 discloses a reactor including a screw feeder main body configured to act as a pressure reaction container, a catalyst supplying unit configured to introduce a catalyst into the screw feeder main body, and a low hydrocarbon supplying unit configured to introduce a low hydrocarbon into the screw feeder main body. In addition, the reactor includes a screw configured to transfer generated nanocarbon, a solid sending unit configured to send out the catalyst and the nanocarbon transferred by the screw, and a gas sending unit configured to send generated hydrogen to outside of the feeder main body.

### Citation List

### Patent Literature

Patent Literature 1: Japanese Unexamined Patent Application Publication No. 2006-290682

### Summary of Invention

The reactor and components thereof according to Patent Literature 1 had a problem in that durability declines when a material to be treated is reacted at a temperature equal to or higher than 300°C in an environment where at least one of the material to be treated and an atmosphere contains sulfur or sulfide.

The present disclosure has been made in order to solve such a problem and an object thereof is to provide a reactor and a reactor component of which durability hardly declines even when a material to be treated is reacted at a temperature equal to or higher than 300°C in an environment where at least one of the material to be treated and an atmosphere contains sulfur or sulfide.

A reactor component according to an embodiment is
used in a reactor configured to react a material to be treated in an environment where at least one of the material to be treated and an atmosphere contains sulfur or sulfide, and
the reactor component is constituted of an alloy of which a principal component is Fe, which contains 13 to 35 percent by mass of Cr, and which contains a total of 0 to 35 percent by mass of Ni and Co.

A reactor component according to an embodiment is
used in a reactor configured to react a material to be treated in an environment where at least one of the material to be treated and an atmosphere contains sulfur or sulfide, and
the reactor component is constituted of an alloy of which a principal component is Ni or Co, which contains 13 to 35 percent by mass of Cr, and which contains a total of 35 to 87 percent by mass of Ni and Co.

A reactor component according to an embodiment is
used in a reactor configured to react a material to be treated in an environment where at least one of the material to be treated and an atmosphere contains sulfur or sulfide,
the reactor component is constituted of an alloy of which a principal component is Ni or Co, which contains less than 13 percent by mass of Cr, and which contains a total of 40 to 80 percent by mass of Ni and Co, and
a coating film is formed on a surface of the alloy.

A reactor according to an embodiment
reacts a material to be treated in an environment where at least one of the material to be treated and an atmosphere contains sulfur or sulfide, and
a cylinder to which the material to be treated is supplied is constituted of an alloy of which a principal component is Fe, which contains 13 to 35 percent by mass of Cr, and which contains a total of 0 to 35 percent by mass of Ni and Co.

A reactor according to an embodiment
reacts a material to be treated in an environment where at least one of the material to be treated and an atmosphere contains sulfur or sulfide, and
a cylinder to which the material to be treated is supplied is constituted of an alloy of which a principal component is Ni or Co, which contains 13 to 35 percent by mass of Cr, and which contains a total of 35 to 87 percent by mass of Ni and Co.

A reactor according to an embodiment
reacts a material to be treated in an environment where at least one of the material to be treated and an atmosphere contains sulfur or sulfide,
a cylinder to which the material to be treated is supplied is constituted of an alloy of which a principal component is Ni or Co, which contains less than 13 percent by mass of Cr, and which contains a total of 40 to 80 percent by mass of Ni and Co, and
a coating film is formed on a surface of the alloy.

According to the present disclosure, a reactor and a reactor component of which durability hardly declines even when a material to be treated is reacted at a temperature equal to or higher than 300°C in an environment where at least one of the material to be treated and an atmosphere contains sulfur or sulfide can be provided.

### Brief Description of Drawings

Fig. 1 is a sectional view of a high-temperature reactor according to a first embodiment;
Fig. 2 is a sectional view of a high-temperature reactor according to a second embodiment;
Fig. 3 is a sectional view of a high-temperature reactor according to a third embodiment;
Fig. 4 is a ternary plot showing compositions of alloys according to Examples E1 to E13 and Comparative Examples C1 to C13; and
Fig. 5 is a graph showing temperature dependence of rates of thermal expansion (coefficients of linear expansion) of alloys according to Comparative Examples C21 and C22 and Example E21.

### Description of Embodiments

Hereinafter, specific embodiments will be described in detail with reference to the drawings. However, it is to be understood that the present invention is not limited to the following embodiments. In addition, for the sake of brevity, the following descriptions and the drawings have been simplified as appropriate.

### <Preliminary study by the inventors>

Apparatuses for manufacturing a desired product by applying a predetermined temperature to a powder-particulate material are known. For example, a positive electrode active material for a lithium-ion secondary battery is manufactured by applying a predetermined temperature to a mixed powder in which a plurality of types of powder-particulate materials are mixed. For example, an apparatus called a rotary kiln manufactures a desired positive electrode active material by heating a hollow furnace body that rotates around a central axis and passing a mixed powder through the furnace body while rolling the mixed powder. In addition, for example, an apparatus called a roller hearth kiln manufactures a desired positive electrode active material by passing a ceramic sheath filled with a mixed powder through a preheated tunnel-shaped furnace body. Various apparatuses have been developed besides the above.

Recently, lithium-ion secondary batteries called solid-state lithium-ion batteries have been being developed. In a solid-state lithium-ion battery, a solid electrolyte is used as an ion conductor in place of a conventional electrolyte. In other words, not only positive electrode active materials but solid electrolytes are also created by applying a predetermined temperature to a powder-particulate material.

On the other hand, unlike the positive electrode material of conventional lithium-ion secondary batteries, when manufacturing the positive electrode active material or the solid electrolyte of a solid-state lithium-ion battery, strict temperature control is preferably performed so that a powder-particulate material is placed within a predetermined temperature range. Furthermore, it is considered preferable to include sulfur in a part of the powder-particulate material and to perform strict atmosphere control so that a sulfur atmosphere is formed inside a furnace to prevent desorption of such a sulfur or sulfide. Specifically, it is considered preferable to use a sulfur compound such as lithium sulfide as the powder-particulate material that contains sulfur in a part of its components and to use, for example, hydrogen sulfide as an atmosphere gas.

However, with a rotary kiln such as that described above, a thick ceramic material is often used as an inner wall of the hollow furnace body and, usually, such a ceramic material has lower thermal conductivity than metal. Therefore, there is a problem in that strict temperature control for suitably applying a predetermined temperature to the mixed powder cannot be performed at a predetermined position inside the hollow furnace body of the rotary kiln.

On the other hand, with a hearth kiln, since the powder-particulate material is conveyed while being placed in a ceramic sheath, temperatures and atmospheres differ between the powder-particulate material near an outside of the sheath and the powder-particulate material near a center of the sheath. Therefore, with a hearth kiln, there is a problem in that strict temperature control and strict atmosphere control cannot be performed with respect to the powder-particulate material as a whole. Owing to such circumstances, there is a problem in that rotary kilns and hearth kilns cannot be applied to manufacturing, on a mass scale, products that require strict temperature control and strict atmosphere control such as the positive electrode active material and the solid electrolyte of solid-state lithium-ion batteries.

In consideration thereof, as exemplified by Patent Literature 1, the inventors solved the problem described above by developing a reactor capable of atmosphere control in which a rotatable screw is laid sideways in a cylindrical reacting furnace (cylinder) to enable a product such as a positive electrode active material or a solid electrolyte for a solid-state lithium-ion battery to be continuously produced from a material to be treated made of a powder-particulate material.

However, the reactor according to Patent Literature 1 had a problem in that durability of the reactor and reactor components declines under conditions in which at least one of a material to be treated and an atmosphere contains sulfur or sulfide.

### (First embodiment)

### <Configuration of reactor>

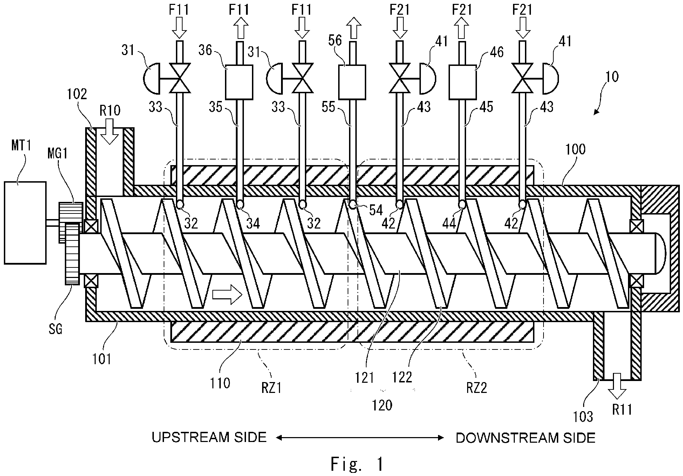

First, a configuration of a high-temperature reactor according to a first embodiment will be described with reference to Fig. 1. Fig. 1 is a sectional view of the high-temperature reactor according to the first embodiment.

As shown in Fig. 1, a high-temperature reactor 10 according to the present embodiment includes a cylinder 100, a heating apparatus 110, and a screw 120.

The high-temperature reactor 10 is a reactor which reacts a material to be treated (for example, a raw material) at a temperature equal to or higher than 300°C and which is used to manufacture, for example, a positive electrode active material or a solid electrolyte for a solid-state lithium-ion battery. The positive electrode active material and the solid electrolyte manufactured by the high-temperature reactor 10 are used as constituent members of the solid-state lithium-ion battery. In other words, the high-temperature reactor 10 can be described as a manufacturing apparatus of members for solid-state lithium-ion batteries.

As shown in Fig. 1, the cylinder 100 includes a cylindrical body part 101 extended in a horizontal direction, a supply port 102 extended upward from an upper end portion on an upstream side of the body part 101, and a discharge port 103 extended downward from a lower end portion on a downstream side of the body part 101. A material to be treated R10 is supplied from the supply port 102 and a product R11 is discharged from the discharge port 103. The cylinder 100 includes an intermediate portion between the supply port 102 and the discharge port 103.

A material constituting the cylinder 100 has heat resistance with respect to a treatment temperature of the material to be treated in a furnace. The treatment temperature is 300°C or higher. The treatment temperature may be 500°C or higher or even 800°C or higher.

In addition, the material constituting the cylinder 100 has sulfidation corrosion resistance with respect to the material to be treated supplied into the furnace or atmosphere (in particular, with respect to sulfur compounds such as lithium sulfide and hydrogen sulfide). A concentration of hydrogen sulfide in the atmosphere is, for example, 10 percent by volume or higher. Hydrogen sulfide is supplied into the atmosphere for the purpose of suppressing desorption of sulfur or sulfide from the material to be treated and forming a state of equilibrium of the sulfur or sulfide. Therefore, the higher the concentration of hydrogen sulfide in the atmosphere, the better and for example, the concentration is preferably 50 percent by volume or higher and more preferably 100 percent by volume. Note that the state of equilibrium of sulfur or sulfide in the atmosphere of the cylinder 100 may be formed due to generation of the sulfur or sulfide from the material to be treated. Alternatively, the state of equilibrium of the sulfur or sulfide may be formed by introducing a sulfur compound from outside the cylinder 100 separately from the material to be treated.

To this end, the cylinder 100 according to the present embodiment is constituted of any of alloys (1) to (3) with the following compositions. (1) An alloy of which a principal component is Fe, which contains 13 to 35 percent by mass of Cr, and which contains a total of 0 to 35 percent by mass of Ni and Co, (2) an alloy of which a principal component is Ni or Co, which contains 13 to 35 percent by mass of Cr, and which contains a total of 35 to 87 percent by mass of Ni and Co, and (3) an alloy of which a principal component is Ni or Co, which contains less than 13 percent by mass of Cr, and which contains a total of 40 to 80 percent by mass of Ni and Co.

In this case, a coating film is formed on a surface of the cylinder 100 constituted of the alloy (3).

Note that a coating film may be formed on the surface of the cylinder 100 constituted of the alloy (1) or (2). Details of the alloy and the coating film which constitute the cylinder 100 will be provided later.

As shown in Fig. 1, the screw 120 is housed inside the cylinder 100. Due to a rotation of the screw 120, the material to be treated R10 supplied into the cylinder 100 from the supply port 102 is conveyed toward a downstream side. As the material to be treated R10 passes through the intermediate portion of the cylinder 100, the material to be treated R10 reacts and a predetermined product R11 is obtained. The predetermined product R11 is then discharged from the discharge port 103.

As shown in Fig. 1, the heating apparatus 110 is provided so as to cover an outer circumferential surface of the intermediate portion of the cylinder 100 and heats the cylinder 100. For example, the heating apparatus 110 includes any heater that enables temperature regulation such as a sheathed heater, a coil heater, or a ceramic heater. Due to the heating apparatus 110, for example, a predetermined position in the intermediate portion of the cylinder 100 can be heated to within a range from normal temperature to around 900°C.

The heating apparatus 110 may be capable of setting a different temperature for each area in the intermediate portion of the cylinder 100 in an axial direction of the screw 120. For example, the heating apparatus 110 varies a heating temperature of the material to be treated R10 between a first reaction zone RZ1 and a second reaction zone RZ2. In other words, there may be one area (reaction zone) of the intermediate portion of the cylinder 100 or there may be two or more areas (reaction zones). In addition, the temperature set by the heating apparatus 110 in a range of one reaction zone may be the same temperature in the axial direction of the screw 120 or the temperature may be varied. In other words, the first reaction zone RZ1 may be set so as to have a start point temperature of 300°C, an end point temperature of 600°C, and a gradual temperature gradient from 300°C to 600°C in a range from the start point to the end point.

In addition, the heating apparatus 110 may include a control apparatus for controlling heating. For example, the control apparatus controls a heating temperature of the cylinder 100 by controlling a current value of a current that flows through the heating apparatus.

Furthermore, the heating apparatus 110 may include a temperature sensor at a predetermined position of the cylinder 100. For example, the control apparatus performs feedback control of the heating temperature of the cylinder 100 based on a temperature measured by the temperature sensor.

Note that the heating apparatus 110 may be configured to heat the cylinder 100 by circulating a thermal medium such as water or oil.

In addition, the high-temperature reactor 10 according to the present embodiment may include a cooling apparatus for cooling the cylinder 100 in addition to the heating apparatus 110.

As shown in Fig. 1, the screw 120 is extended along approximately an entire length of the cylinder 100. Due to a rotation of the screw 120, the material to be treated R10 supplied from the supply port 102 is conveyed toward the discharge port 103.

In the screw 120 shown in Fig. 1, a spiral screw flight 122 is formed around a shaft 121 extended in a left-right direction in Fig. 1. Due to the screw flight 122 rotating while coming into contact with the material to be treated R10, the screw 120 conveys the material to be treated R10 from the upstream side toward the downstream side.

Note that there may be two or more screws 120. In other words, the high-temperature reactor 10 may include a plurality of screws 120 arranged parallel to one another.

A material that constitutes the screw 120 is constituted of any of the alloys (1) to (3) described above in a similar manner to the cylinder 100. In addition, a coating film may be formed on the surface of the screw 120 constituted of the alloy.

Since details of the alloy and the coating film constituting the screw 120 are similar to the alloy and the coating film constituting the cylinder 100 to be described later, a description thereof will be omitted.

Note that a shape of the screw flight 122 shown in Fig. 1 is an example and the shape of the screw flight 122 is not limited thereto. The screw flight 122 may have a different shape for each area of the cylinder 100. More specifically, a spiral pitch of the screw flight 122 may vary for each area of the cylinder 100. In this case, a spiral shape of the screw flight 122 may have two threads instead of one. In addition, the screw flight 122 may have a portion that is not spiral-shaped. Furthermore, a thickness and a shape of the shaft 121 of the screw 120 may vary.

Due to such a configuration, in the high-temperature reactor 10, a speed, a conveyance amount, and the like of the material to be treated R10 that is conveyed by the screw 120 can be set for each area of the cylinder 100. The conveyance amount of the material to be treated R10 may be appropriately changed according to applications and, for example, 200 grams/hour or more is preferable for prototyping and 100 grams/hour or more is preferable for production. Furthermore, stirring, kneading, or pulverizing may be added for each area of the cylinder 100 in the high-temperature reactor 10 while conveying the material to be treated R10 at a predetermined speed.

The shaft 121 of the screw 120 is rotatably supported by both end portions of the cylinder 100. In addition, the screw 120 shown in Fig. 1 is coupled to a drive apparatus MT1 in an upstream-side end portion. In Fig. 1, a drive gear MG1 fixed to a rotary shaft of the drive apparatus MT1 and a screw gear SG fixed to an upstream-side end portion of the shaft 121 of the screw 120 mesh together.

Materials that constitute the drive gear MG1 and the screw gear SG are constituted of any of the alloys (1) to (3) described above. In addition, a coating film may be formed on the surfaces of the drive gear MG1 and the screw gear SG constituted of the alloy.

Since details of the alloy and the coating film constituting the drive gear MG1 and the screw gear SG are similar to the alloy and the coating film constituting the cylinder 100 to be described later, a description thereof will be omitted.

In this case, the drive apparatus MT1 is, for example, a rotary drive mechanism such as a motor and rotates and drives the screw 120. The drive apparatus MT1 may be capable of changing the number of revolutions of the screw 120. In this case, the drive apparatus MT1 may be a motor of which the number of revolutions can be changed or a combination of a motor of which the number of revolutions is constant and a reducer of which a reduction ratio can be changed.

The first reaction zone RZ1 is an area between the supply port 102 and the second reaction zone RZ2 or, in other words, an upstream-side area in the intermediate portion of the cylinder 100. In order to provide the first reaction zone RZ1 with a predetermined atmosphere, the first reaction zone RZ1 includes a first supplying unit 32 and a first fluid supply pipe 33 capable of supplying a first fluid F11 to the cylinder 100 and a first discharging unit 34 and a first fluid discharge pipe 35 capable of discharging the first fluid F11 from the cylinder 100.

The first supplying unit 32 is a component including a hole for supplying the first fluid F11 into the cylinder 100 in the first reaction zone RZ1. One end of the first fluid supply pipe 33 is connected to the first supplying unit 32 connected to the cylinder 100. While there may be one each of the first supplying unit 32 and the first fluid supply pipe 33, there are preferably two or more of each of the first supplying unit 32 and the first fluid supply pipe 33 in accordance with a length of the first reaction zone RZ1. As shown in Fig. 1, another end of the first fluid supply pipe 33 may be connected to a first flow rate control valve 31. Due to the first flow rate control valve 31, a flow rate of the first fluid F11 to be supplied to the first reaction zone RZ1 via the first fluid supply pipe 33 can be controlled.

The first discharging unit 34 is a component including a hole for discharging at least a part of the first fluid F11 in the first reaction zone RZ1 to outside of the cylinder 100. One end of the first fluid discharge pipe 35 is connected to the first discharging unit 34 connected to the cylinder 100. While there may be one each of the first discharging unit 34 and the first fluid discharge pipe 35, there are preferably two or more of each of the first discharging unit 34 and the first fluid discharge pipe 35 and, even more preferably, one each is provided so as to be divided between an upstream side and a downstream side of the first supplying unit 32.

The first fluid F11 may be in any form as long as the first fluid F11 has fluidity. In other words, the first fluid F11 may be any of a gas, a liquid, a mixture of a gas and a liquid, and a mixture of a liquid and a solid. In addition, the form of the first fluid F11 may change in the first reaction zone RZ1. The first fluid F11 may be a mixed gas in which, for example, hydrogen sulfide and nitrogen are mixed at a volume ratio of 2:1. After the first fluid F11 is supplied to the first reaction zone RZ1 by the first supplying unit 32, the first fluid F11 flows so as to respectively branch upstream and downstream of the cylinder 100 and is discharged from the first discharging unit 34.

As shown in Fig. 1, another end of the first fluid discharge pipe 35 may be connected to a first forced discharge apparatus 36. The first forced discharge apparatus 36 has a function of being able to forcibly discharge a fluid and efficiently discharges at least a part of the first fluid F11 from the first reaction zone RZ1 via the first discharging unit 34 and the first fluid discharge pipe 35. For example, the first forced discharge apparatus 36 may be a pump using a rotation of the motor or an aspirator or an ejector using a Venturi effect. The first forced discharge apparatus 36 is not limited to the configuration described above as long as the first forced discharge apparatus 36 provides a mechanism of forcibly discharging a fluid discharged from the first reaction zone RZ1.

In this case, materials that constitute the first flow rate control valve 31, the first supplying unit 32, the first fluid supply pipe 33, the first discharging unit 34, the first fluid discharge pipe 35, and the first forced discharge apparatus 36 are constituted of any of the alloys (1) to (3) described above in a similar manner to the cylinder 100. In addition, a coating film may be formed on the surfaces of the first flow rate control valve 31, the first supplying unit 32, the first fluid supply pipe 33, the first discharging unit 34, the first fluid discharge pipe 35, and the first forced discharge apparatus 36 constituted of the alloy.

Since details of the alloy and the coating film constituting the first flow rate control valve 31, the first supplying unit 32, the first fluid supply pipe 33, the first discharging unit 34, the first fluid discharge pipe 35, and the first forced discharge apparatus 36 are similar to the alloy and the coating film constituting the cylinder 100 to be described later, a description thereof will be omitted.

The second reaction zone RZ2 is an area between the first reaction zone RZ1 and the discharge port 103 or, in other words, a downstream-side area in the intermediate portion of the cylinder 100.

In order to provide the second reaction zone RZ2 with a predetermined atmosphere, the second reaction zone RZ2 includes a second supplying unit 42 and a second fluid supply pipe 43 capable of supplying a second fluid F21 of which a type and a ratio of components differ from the first fluid F11 to the cylinder 100 and further includes a second discharging unit 44 and a second fluid discharge pipe 45 capable of discharging the second fluid F21 from the cylinder 100.

The second supplying unit 42 is a component including a hole for supplying the second fluid F21 into the cylinder 100 in the second reaction zone RZ2. One end of the second fluid supply pipe 43 is connected to the second supplying unit 42 connected to the cylinder 100. While there may be one each of the second supplying unit 42 and the second fluid supply pipe 43, there are preferably two or more of each of the second supplying unit 42 and the second fluid supply pipe 43 in accordance with a length of the second reaction zone RZ2. As shown in Fig. 1, another end of the second fluid supply pipe 43 may be connected to a second flow rate control valve 41. Due to the second flow rate control valve 41, a flow rate of the second fluid F21 to be supplied to the second reaction zone RZ2 via the second fluid supply pipe 43 can be controlled.

The second discharging unit 44 is a component including a hole for discharging at least a part of the second fluid F21 in the second reaction zone RZ2 to outside of the cylinder 100. One end of the second fluid discharge pipe 45 is connected to the second discharging unit 44 connected to the cylinder 100. While there may be one each of the second discharging unit 44 and the second fluid discharge pipe 45, there are preferably two or more of each of the second discharging unit 44 and the second fluid discharge pipe 45 and, even more preferably, one each is provided so as to be divided between an upstream side and a downstream side of the second supplying unit 42.

The second fluid F21 may be in any form as long as the second fluid F21 has fluidity in a similar manner to the first fluid F11. In other words, the second fluid F21 may be any of a gas, a liquid, a mixture of a gas and a liquid, and a mixture of a liquid and a solid. In addition, the form of the second fluid F21 may change in the second reaction zone RZ2. The second fluid F21 is, for example, hydrogen sulfide. After the second fluid F21 is supplied to the second reaction zone RZ2 by the second supplying unit 42, the second fluid F21 flows so as to respectively branch upstream and downstream of the cylinder 100 and is discharged from the second discharging unit 44.

As shown in Fig. 1, another end of the second fluid discharge pipe 45 may be connected to a second forced discharge apparatus 46. The second forced discharge apparatus 46 has a function of being able to forcibly discharge a fluid and efficiently discharges at least a part of the second fluid F21 from the second reaction zone RZ2 via the second discharging unit 44 and the second fluid discharge pipe 45. A configuration of the second forced discharge apparatus 46 is similar to the configuration of the first forced discharge apparatus 36.

The other ends of the first fluid discharge pipe 35 and the second fluid discharge pipe 45 are respectively connected to, for example, an absorption apparatus, a combustion-decomposition apparatus, and the like which are not illustrated. Each of the fluids discharged via the first fluid discharge pipe 35 and the second fluid discharge pipe 45 may be made disposable by such components. The absorption apparatus is, for example, a scrubber which, by atomizing a solvent while passing a fluid through a tubular body filled with a filler, causes the solvent to dissolve the fluid. The combustion-decomposition apparatus is, for example, a combustor which burns and decomposes a fluid using flames generated by a burner torch or the like.

Alternatively, the other ends of the first fluid discharge pipe 35 and the second fluid discharge pipe 45 are respectively connected to, for example, a cooling apparatus, a concentration sensor, and a liquid mixing unit which are not illustrated. Each of the fluids discharged via the first fluid discharge pipe 35 and the second fluid discharge pipe 45 may be supplied once again to the cylinder 100 as the first fluid F11 and the second fluid F21 by such components. The cooling apparatus cools each of the fluids discharged via the first fluid discharge pipe 35 and the second fluid discharge pipe 45 and respectively converts the fluids into a first cooled fluid and a second cooled fluid (not illustrated). The liquid mixing unit respectively adjusts the first cooled fluid and the second cooled fluid so as to assume desired concentrations and makes the first cooled fluid and the second cooled fluid reusable.

Besides re-supplying the first cooled fluid and the second cooled fluid to the cylinder 100 via the liquid mixing unit, the first cooled fluid and the second cooled fluid may be respectively recovered as reusable fluids by a first cooled fluid recovery unit and a second cooled fluid recovery unit (not illustrated).

In this case, materials that constitute the second flow rate control valve 41, the second supplying unit 42, the second fluid supply pipe 43, the second discharging unit 44, the second fluid discharge pipe 45, and the second forced discharge apparatus 46 are constituted of any of the alloys (1) to (3) described above in a similar manner to the cylinder 100. In addition, a coating film may be formed on the surfaces of the second flow rate control valve 41, the second supplying unit 42, the second fluid supply pipe 43, the second discharging unit 44, the second fluid discharge pipe 45, and the second forced discharge apparatus 46 constituted of the alloy.

Since details of the alloy and the coating film constituting the second flow rate control valve 41, the second supplying unit 42, the second fluid supply pipe 43, the second discharging unit 44, the second fluid discharge pipe 45, and the second forced discharge apparatus 46 are similar to the alloy and the coating film constituting the cylinder 100 to be described later, a description thereof will be omitted.

Furthermore, as shown in Fig. 1, a third discharging unit 54 and a third fluid discharge pipe 55 are provided in a boundary portion between the first reaction zone RZ1 and the second reaction zone RZ2. The third discharging unit 54 is a component including a hole for discharging the first fluid F11, the second fluid F21, or a mixture fluid thereof to outside of the cylinder 100. One end of the third fluid discharge pipe 55 is connected to the third discharging unit 54 connected to the cylinder 100.

As shown in Fig. 1, another end of the third fluid discharge pipe 55 may be connected to a third forced discharge apparatus 56. The third forced discharge apparatus 56 has a function of being able to forcibly discharge a fluid and efficiently discharges the first fluid F11, the second fluid F21, or a mixture fluid thereof via the third discharging unit 54 and the third fluid discharge pipe 55. A configuration of the third forced discharge apparatus 56 is similar to the configurations of the first forced discharge apparatus 36 and the second forced discharge apparatus 46.

In this case, materials that constitute the third discharging unit 54, the third fluid discharge pipe 55, and the third forced discharge apparatus 56 are constituted of any of the alloys (1) to (3) described above in a similar manner to the cylinder 100. In addition, a coating film may be formed on the surfaces of the third discharging unit 54, the third fluid discharge pipe 55, and the third forced discharge apparatus 56 constituted of the alloy.

Since details of the alloy and the coating film constituting the third discharging unit 54, the third fluid discharge pipe 55, and the third forced discharge apparatus 56 are similar to the alloy and the coating film constituting the cylinder 100 to be described later, a description thereof will be omitted.

Due to the configuration described above, in the high-temperature reactor 10, the material to be treated R10 having passed through the first reaction zone RZ1 is further reacted in the second reaction zone RZ2. In addition, the material to be treated R10 having passed through the second reaction zone RZ2 is conveyed to the discharge port 103 and discharged as the product R11. Note that the number of reaction zones is not limited to two and there may be one reaction zone or two or more reaction zones. In addition, a chemical reaction such as a compounding reaction or a decomposition reaction or a physical reaction such as vaporization or liquefaction may be performed in a reaction zone. In a reaction zone, preliminary heating (preheating) to ensure that a desired reaction takes place in an efficient manner in a next reaction zone or cooling in order to safely discharge the product R11 from the discharge port 103 may be performed even when not accompanied by the reactions described above.

While the first supplying unit 32 and the second supplying unit 42 are arranged in an upper part of the cylinder 100 in Fig. 1, alternatively, the first supplying unit 32 and the second supplying unit 42 may be arranged in a side part or a lower part of the cylinder 100. In a similar manner, while the first discharging unit 34, the second discharging unit 44, and the third discharging unit 54 are arranged in the upper part of the cylinder 100 in Fig. 1, alternatively, the first discharging unit 34, the second discharging unit 44, and the third discharging unit 54 may be arranged in the side part or the lower part of the cylinder 100.

Furthermore, the first supplying unit 32 and the second supplying unit 42 may be arranged at different positions in a circumferential direction of the cylinder 100. In a similar manner, the first discharging unit 34, the second discharging unit 44, and the third discharging unit 54 may be arranged at different positions in the circumferential direction of the cylinder 100.

### <Details of alloy constituting cylinder 100>

As described above, the cylinder 100 according to the present embodiment is constituted of any of the alloys (1) to (3) described above with the following compositions. (1) An alloy of which a principal component is Fe, which contains 13 to 35 percent by mass of Cr, and which contains a total of 0 to 35 percent by mass of Ni and Co, (2) an alloy of which a principal component is Ni or Co, which contains 13 to 35 percent by mass of Cr, and which contains a total of 35 to 87 percent by mass of Ni and Co, and (3) an alloy of which a principal component is Ni or Co, which contains less than 13 percent by mass of Cr, and which contains a total of 40 to 80 percent by mass of Ni and Co.

In this case, a coating film is formed on a surface of the cylinder 100 constituted of the alloy (3).

In the alloy (1), a total of Ni and Co is preferably 30 percent by mass or less and more preferably 25 percent by mass or less. In addition, in the alloy (2), the total of Ni and Co is preferably 40 percent by mass or more and more preferably 45 percent by mass or more. On the other hand, the total of Ni and Co is preferably 80 percent by mass or less and more preferably 75 percent by mass or less.

In the alloys (1) and (2) described above, adding 13 percent by mass or more of Cr improves oxidation resistance and corrosion resistance and adding less than 35 percent by mass of Cr enables generation of a TCP (Topologically Close Packed) phase that adversely affects ductility and toughness to be suppressed. From the perspective of suppressing generation of a TCP phase, an additive amount of Cr is preferably 30 percent by mass or less.

Concentrations of Cr, Mo, and other alloy elements are measured in conformity with JIS G1256 2013 (Iron and steel - Method for X-ray fluorescence spectrometric analysis).

In addition, the alloy (in particular, the alloys (2) and (3)) preferably contains 5 to 20 percent by mass of W. Adding 5 percent by mass or more of W reduces a difference in rates of thermal expansion (coefficients of linear expansion) between the alloy and a ceramic film being a coating film and enables an occurrence of cracks in the ceramic film to be suppressed and adding 20 percent by mass or less of W enables streak-like segregation to be suppressed. In addition, since W is a solid-solution-strengthening alloy element, strength and high-temperature strength are improved by adding W. From the perspective of suppressing streak-like segregation, an additive amount of W is preferably 15 percent by mass or less.

The alloy may further contain 0.3 to 25 percent by mass of Mo.

Adding 0.3 percent by mass or more of Mo improves high-temperature strength and adding 25 percent by mass or less of Mo enables generation of a TCP phase that adversely affects ductility and toughness to be suppressed.

In order to improve high-temperature strength, the additive amount of Mo may be set to 1 percent by mass or more or further set to 3 percent by mass or more. On the other hand, in order to suppress generation of a TCP phase, the additive amount of Mo may be set to 20 percent by mass or less or further set to 15 percent by mass or less.

The alloy may further contain 1 to 3 percent by mass of Al. Al is a precipitation-strengthening alloy element.

Adding 1 percent by mass or more of Al improves strength and adding 3 percent by mass or less of Al enables a decline in hot workability and the like to be suppressed.

The alloy may contain 1 percent by mass or less of each or 1 to 5 percent by mass of a total of at least one added element selected from the group consisting of C, B, Si, Ti, Nb, Y, Hf, Zr, Ta, and Mn.

Since adding C causes a carbide to be formed, crystal grains are refined and strength and high-temperature strength are improved by adding C.

B, Hf, and Zr are segregated in a grain boundary. Therefore, B, Hf, and Zr improve high-temperature strength.

Adding Mn improves toughness of the alloy.

Si functions as a deoxidizer during melting of the alloy.

Ti, Nb, and Ta are precipitation-strengthening alloy elements. Therefore, adding Ti, Nb, and Ta improves strength and high-temperature strength. In addition, since adding Ti causes a carbide to be formed, crystal grains are refined and strength and high-temperature strength are improved by adding Ti.

### <Details of coating film constituting cylinder 100>

While a material of the coating film is not particularly limited, a material that is readily uniformly formed on surfaces of components of the high-temperature reactor such as a ceramic film or metal plating is preferable.

While the ceramic that constitutes the ceramic film is not particularly limited, for example, the ceramic is an oxide such as alumina or zirconia, a nitride such as titanium nitride or silicon nitride, a carbide such as titanium carbide, or a boride such as chromium boride.

The ceramic film has a thickness of, for example, 0.01 to 5 mm. In addition, depending on a formation method of an alumina film, an alteration layer (a diffusion layer) that ranges from 0.01 to 5 mm may be formed on an interface between a matrix and the ceramic film.

While a formation method of the ceramic film is not particularly limited, in the case of an alumina film, a spraying method, a vapor deposition method, a sputtering method, a CVD method, a wet method using a precursor such as aluminum alkoxide, or an anode oxidation method of metallic aluminum can be adopted.

Although a metal constituting the metal plating is not particularly limited, for example, the metal plating may be a single-layer plating of chromium, nickel, titanium, or a precious metal, a multilayer plating of which a first layer is nickel and second and third layers are chromium or a precious metal, or a composite plating that combines a metal with a ceramic.

As described above, in the high-temperature reactor 10 according to the present embodiment, the cylinder 100 and the screw 120 are constituted of any of the alloys (1) to (3) described above with the following compositions.
(1) An alloy of which a principal component is Fe, which contains 13 to 35 percent by mass of Cr, and which contains a total of 0 to 35 percent by mass of Ni and Co,
(2) an alloy of which a principal component is Ni or Co, which contains 13 to 35 percent by mass of Cr, and which contains a total of 35 to 87 percent by mass of Ni and Co, and
(3) an alloy of which a principal component is Ni or Co, which contains less than 13 percent by mass of Cr, and which contains a total of 40 to 80 percent by mass of Ni and Co.

In this case, a coating film is formed on a surface of the cylinder 100 constituted of the alloy (3).

Therefore, the high-temperature reactor 10 according to the present embodiment can withstand a severe use environment at a temperature of 300°C or higher and in an atmosphere containing sulfur compounds.

Note that at least one of the cylinder 100 and the screw 120 need be constituted of the alloy described above.

In addition, besides the cylinder 100 and the screw 120, other reactor components used in the high-temperature reactor 10 may be constituted of the alloy described above. The reactor components may include gears such as the drive gear MG1 and the screw gear SG described above and pipes such as the first fluid discharge pipe 35 and the second fluid discharge pipe 45 described above.

### (Second embodiment)

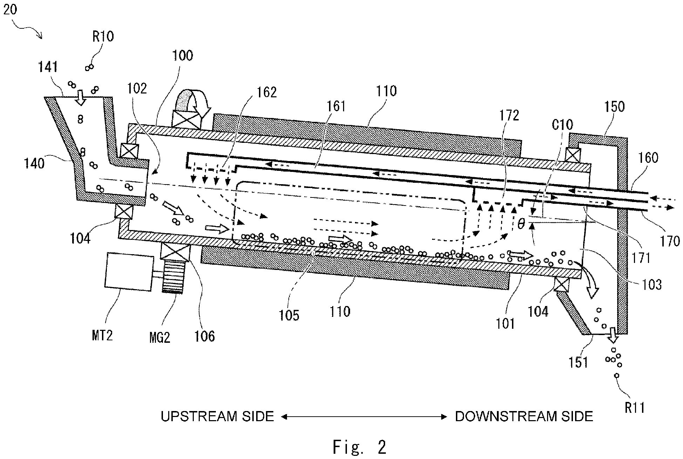

Next, a configuration of a high-temperature reactor according to a second embodiment will be described with reference to Fig. 2. Fig. 2 is a sectional view of the high-temperature reactor according to the second embodiment.

As shown in Fig. 2, a high-temperature reactor 20 according to the present embodiment includes the cylinder 100 and the heating apparatus 110 in a similar manner to the high-temperature reactor 10 shown in Fig. 1 but does not include the screw 120. In addition, the high-temperature reactor 20 according to the present embodiment further includes a feeder 140, a kiln foot 150, a fluid supplying apparatus 160, and a fluid discharging apparatus 170.

In the cylinder 100 of the high-temperature reactor 20 according to the present embodiment, the supply port 102 is provided on an end surface on the upstream side of the cylindrical body part 101. On the other hand, an end surface on the downstream side of the body part 101 is opened and constitutes the discharge port 103. In addition, in the high-temperature reactor 20 according to the present embodiment, the cylinder 100 is rotatably supported with a central axis C10 as a rotational axis and constitutes a rotary kiln.

In addition, the cylinder 100 shown in Fig. 2 is coupled to a drive apparatus MT2 on the upstream side. In Fig. 2, a drive gear MG2 fixed to a rotary shaft of the drive apparatus MT2 and a cylinder gear 106 fixed to the outer circumferential surface of the body part 101 of the cylinder 100 mesh together.

In this case, materials that constitute the drive gear MG2 and the cylinder gear 106 are constituted of any of the alloys (1) to (3) described above in a similar manner to the cylinder 100. In addition, a coating film may be formed on the surfaces of the drive gear MG2 and the cylinder gear 106 constituted of the alloy.

Since details of the alloy and the coating film constituting the drive gear MG2 and the cylinder gear 106 are similar to the alloy and the coating film constituting the cylinder 100 according to the first embodiment, a description thereof will be omitted.

In this case, the drive apparatus MT2 is, for example, a rotary drive mechanism such as a motor and rotates and drives the cylinder 100. The drive apparatus MT2 may be capable of changing the number of revolutions of the cylinder 100. In this case, the drive apparatus MT2 may be a motor of which the number of revolutions can be changed or a combination of a motor of which the number of revolutions is constant and a reducer of which a reduction ratio can be changed.

As shown in Fig. 2, the cylinder 100 may be installed so that the central axis C10 is inclined at a predetermined angle θ (for example, 0° < θ < 90°) so that an upstream side becomes higher than a downstream side. Accordingly, in the cylinder 100, a predetermined material to be treated R10 that has been received is conveyed along the central axis C10 toward the discharge port 103 while coming into contact with an inner wall of the body part 101.

The feeder 140 is coupled via a bearing 104 to the supply port 102 of the cylinder 100 shown in Fig. 2. In other words, an upstream-side end portion of the cylinder 100 is rotatably supported by the feeder 140. The material to be treated R10 fed from a feeding port 141 provided in an upper end portion of the feeder 140 is introduced into the body part 101 of the cylinder 100 via the supply port 102 of the cylinder 100.

On the other hand, the kiln foot 150 is coupled via the bearing 104 to the discharge port 103 of the cylinder 100. In other words, a downstream-side end portion of the cylinder 100 is rotatably supported by the kiln foot 150. The product R11 discharged from the discharge port 103 of the cylinder 100 is discharged from the high-temperature reactor 10 via a product discharge port 151 provided in a lower end portion of the kiln foot 150.

In addition, as shown in Fig. 2, the fluid supplying apparatus 160 and the fluid discharging apparatus 170 are fixed by the kiln foot 150.

In this case, materials that constitute the feeder 140 and the kiln foot 150 are constituted of any of the alloys (1) to (3) described above in a similar manner to the cylinder 100. In addition, a coating film may be formed on the surfaces of the feeder 140 and the kiln foot 150 constituted of the alloy.

Since details of the alloy and the coating film constituting the feeder 140 and the kiln foot 150 are similar to the alloy and the coating film constituting the cylinder 100 according to the first embodiment, a description thereof will be omitted.

The fluid supplying apparatus 160 supplies a predetermined fluid to the cylinder 100. While the predetermined fluid is a gas or a liquid, the predetermined fluid may contain a solid with fluidity such as a powder. The fluid supplying apparatus 160 includes a fluid supply pipe 161 and a fluid supply port 162. The fluid supplying apparatus 160 may include a storage for storing the predetermined fluid and a pump for force-feeding the fluid.

The fluid supply pipe 161 is a pipe extended from a side of one end or a side of another end of the cylinder 100 to an upstream side of a contact area 105 in the body part 101. The predetermined fluid is introduced into the cylinder 100 via the fluid supply pipe 161. In the example shown in Fig. 2, the fluid supply pipe 161 is fixed to the kiln foot 150 and is extended from the kiln foot 150 to an upstream side of the contact area 105 in the body part 101 of the cylinder 100.

Note that the fluid supply pipe 161 may be fixed to the high-temperature reactor 20 by the feeder 140 or another fixing member in place of the kiln foot 150.

The fluid supply port 162 is an opening provided in a leading end portion of the fluid supply pipe 161 in order to introduce the predetermined fluid force-fed by the fluid supply pipe 161 into the body part 101. The fluid supply port 162 shown in Fig. 2 includes a plurality of holes. However, the fluid supply port 162 may be solely constituted of a single hole or constituted of a porous member through which the predetermined fluid can be passed.

The fluid discharging apparatus 170 discharges a fluid inside the cylinder 100 to the outside of the cylinder 100. The fluid discharged by the fluid discharging apparatus 170 may be, for example, a fluid which has been supplied from the fluid supplying apparatus 160 and which has come into contact with the material to be treated R10. The fluid discharging apparatus 170 includes a fluid discharge pipe 171 and a fluid discharge port 172. The fluid discharging apparatus 170 may include a pump for discharging the fluid and the like.

The fluid discharge pipe 171 is a pipe extended from a side of one end or a side of another end of the cylinder 100 to a downstream side of the contact area 105 in the body part 101. The fluid inside the cylinder 100 is discharged to the outside of the cylinder 100 via the fluid discharge pipe 171. In the example shown in Fig. 2, the fluid discharge pipe 171 is fixed to the kiln foot 150 and is extended from the kiln foot 150 to a downstream side of the contact area 105 in the body part 101 of the cylinder 100.

Note that the fluid discharge pipe 171 may be fixed to the high-temperature reactor 20 by the feeder 140 or another fixing member in place of the kiln foot 150.

The fluid discharge port 172 is an opening provided in a leading end portion of the fluid discharge pipe 171 in order to discharge a fluid having passed through the contact area 105. The fluid discharge port 172 shown in Fig. 2 includes a plurality of holes. However, the fluid supply port 162 may be solely constituted of a single hole or constituted of a porous member through which the predetermined fluid can be passed.

The fluid supplying apparatus 160 and the fluid discharging apparatus 170 are extended in a direction parallel to the central axis C10 so as not to impede rotation of the cylinder 100 and are provided separated from the inner wall of the body part 101.

In addition, the fluid supplying apparatus 160 and the fluid discharging apparatus 170 may be fixed to the kiln foot 150 in a coupled state or respectively independently fixed to the kiln foot 150.

Furthermore, the fluid supplying apparatus 160 and the fluid discharging apparatus 170 may be fixed to the feeder 140 in addition to being fixed to the kiln foot 150.

In Fig. 2, the fluid supply port 162 is positioned on an upstream side of the body part 101 and releases a fluid downward to where the material to be treated R10 is present. In addition, the fluid discharge port 172 is positioned on a downstream side so as to be separated from the fluid supply port 162 in a direction along the central axis C10 and discharges the fluid present below. Due to such a configuration, the contact area 105 can be provided which is an area between the fluid supply port 162 and the fluid discharge port 172 where the fluid supplied from the fluid supply port 162 comes into contact with the material to be treated R10.

The contact area 105 is an area where the fluid released from the fluid supply port 162 and the material to be treated R10 come into contact with each other. In Fig. 2, an area indicated by a bold dashed-two dotted line is the contact area 105. In the contact area 105, the material to be treated R10 comes into contact while rolling and flowing with the fluid supplied from the fluid supplying apparatus 160. Accordingly, the material to be treated R10 becomes the predetermined product R11 and is conveyed to the discharge port 103. Furthermore, the fluid supplied from the fluid supply port 162 passes through the contact area 105 and is subsequently discharged to the fluid discharge port 172 positioned on a downstream side of the contact area 105.

In this case, materials that constitute the fluid supplying apparatus 160 and the fluid discharging apparatus 170 are constituted of any of the alloys (1) to (3) described above in a similar manner to the cylinder 100. In addition, a coating film may be formed on the surfaces of the fluid supplying apparatus 160 and the fluid discharging apparatus 170 constituted of the alloy.

Since details of the alloy and the coating film constituting the fluid supplying apparatus 160 and the fluid discharging apparatus 170 are similar to the alloy and the coating film constituting the cylinder 100 according to the first embodiment, a description thereof will be omitted.

Since other components are similar to the components according to the first embodiment, descriptions thereof will be omitted.

### (Third embodiment)

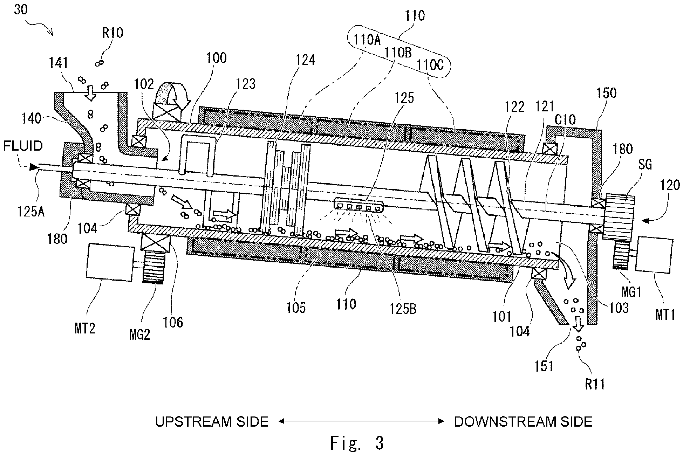

Next, a configuration of a high-temperature reactor according to a third embodiment will be described with reference to Fig. 3. Fig. 3 is a sectional view of the high-temperature reactor according to the third embodiment.

As shown in Fig. 3, a high-temperature reactor 30 according to the present embodiment includes the screw 120 in addition to the cylinder 100, the heating apparatus 110, the feeder 140, and the kiln foot 150 shown in Fig. 2.

The heating apparatus 110 according to the present embodiment includes a plurality of different heating areas in a direction of the central axis C10 in an intermediate portion of the cylinder 100. More specifically, as shown in Fig. 3, the heating apparatus 110 includes a first heating area 110A, a second heating area 110B, and a third heating area 110C. The first heating area 110A is arranged separated from the supply port 102 of the cylinder 100 on a most upstream side. The second heating area 110B is arranged between the first heating area 110A and the third heating area 110C. The third heating area 110C is arranged separated from the discharge port 103 of the cylinder 100 on a most downstream side.

Each of the first heating area 110A, the second heating area 110B, and the third heating area 110C is set to a different temperature. In other words, the heating apparatus 110 is capable of setting a different temperature with respect to a different area of the cylinder 100. Accordingly, the high-temperature reactor 20 can promote or suppress a desired reaction in accordance with an area of the cylinder 100.

As shown in Fig. 3, in the high-temperature reactor 30 according to the present embodiment, the screw 120 includes a stirrer 123, a pulverizer 124, and a spray 125 in addition to the shaft 121 and the screw flight 122 shown in Fig. 1. Specifically, the screw 120 sequentially includes the stirrer 123, the pulverizer 124, the spray 125, and the screw flight 122 from an upstream side in a longitudinal direction of the shaft 121.

More specifically, the stirrer 123 and the pulverizer 124 are installed at a position corresponding to the first heating area 110A in the shaft 121. The spray 125 is installed at a position corresponding to the second heating area 110B in the shaft 121. In addition, the screw flight 122 is installed at a position corresponding to the third heating area 110C in the shaft 121.

Note that the numbers and the arrangements of the screw flight 122, the stirrer 123, the pulverizer 124, and the spray 125 in the shaft 121 are not limited to the numbers and the arrangements described above. For example, the shaft 121 may include the screw flight 122, the stirrer 123, the pulverizer 124, and the spray 125 but not the pulverizer 124.

As shown in Fig. 3, in the high-temperature reactor 30 according to the present embodiment, an upstream-side end portion of the shaft 121 extended along the central axis C10 of the cylinder 100 is rotatably supported by a bearing 180 provided in the feeder 140. A downstream-side end portion of the shaft 121 is rotatably supported by the bearing 180 provided in the kiln foot 150.

The screw 120 shown in Fig. 3 is coupled to the drive apparatus MT1 in a downstream-side end portion. In Fig. 3, the drive gear MG1 fixed to the rotary shaft of the drive apparatus MT1 and the screw gear SG fixed to a downstream-side end portion of the shaft 121 of the screw 120 mesh together.

The stirrer 123 stirs the material to be treated R10 having been received from the supply port 102. The stirrer 123 is constituted of, for example, a rod-like member that protrudes in a radial direction from the shaft 121. The stirrer 123 shown in Fig. 3 is constituted of a rod-like member with a cornered U-shape as viewed in a direction perpendicular to the shaft 121. In the example shown in Fig. 3, the stirrer 123 includes two of the rod-like members. As the shaft 121 rotates, the stirrer 123 stirs the material to be treated R10.

The pulverizer 124 pulverizes the material to be treated R10 having been stirred by the stirrer 123. For example, the pulverizer 124 is constituted of a plurality of plate-like members with an elliptical shape in a plan view which are fixed to the shaft 121. A long diameter portion of the elliptical plate-like members extends to a vicinity of the inner wall of the body part 101. Therefore, as the shaft 121 rotates, the material to be treated R10 in clusters becomes sandwiched between the pulverizer 124 and the body part 101 and is pulverized.

The spray 125 injects a predetermined fluid to the inside of the body part 101 and causes the fluid to come into contact with the material to be treated R10. The shaft 121 includes a fluid introduction port 125A in the upstream-side end portion and a pipe that guides the fluid to the spray 125. The spray 125 injects, from a fluid injection port 125B, the fluid introduced from the fluid introduction port 125A. In other words, the material to be treated R10 having been pulverized by the pulverizer 124 comes into contact with the fluid injected from the spray 125. The fluid injected from the spray 125 may be an inert gas or a predetermined gas for promoting a reaction. In addition, the fluid injected from the spray 125 may contain a powder, a liquid, or the like that has fluidity.

The screw flight 122 conveys, downstream, a predetermined product generated by passing through the area where the spray 125 is arranged.

Since other components are similar to the components according to the first or second embodiment, descriptions thereof will be omitted.

While high-temperature reactors according to the first to third embodiments have been described above, a high-temperature reactor is not limited to the embodiments described above. In addition, a high-temperature reactor is not limited to being applied to manufacturing members of solid-state lithium-ion batteries. In other words, a high-temperature reactor can be used to manufacture members of batteries other than solid-state lithium-ion batteries.

In addition, for example, a high-temperature reactor may be used as a reactor for decomposing a vulcanizate or a waste plastic that is the material to be treated R10 at a molecular level and recovering various substances as valuables. The valuables are not limited to resins and may include alcohol, ammonia, or hydrocarbons. Such substances recovered by the high-temperature reactor are reused as gas, oil, or chemical treatment material. In other words, the high-temperature reactor may be used as a so-called chemical recycling apparatus.

Alternatively, a high-temperature reactor may be used as a reactor for generating hydrogen from a resource such as natural gas. In this case, the material to be treated R10 may contain a particulate catalyst. The particulate catalyst is created by causing, for example, a ceramic catalyst carrier such as porous alumina to carry fine metal particles such as iron particles. In other words, the high-temperature reactor may be used as a so-called hydrogen manufacturing apparatus.

### <First example>

Hereinafter, characteristics of an alloy used in, for example, the high-temperature reactor 10 according to the first embodiment will be described using comparative examples and examples. However, it is to be understood that the alloy used in the high-temperature reactor 10 according to the first embodiment is not solely limited to the following examples.

Table 1 described below collectively shows compositions of alloys according to Examples E1 to E13 and Comparative Examples C1 to C13. Specifically, as shown in Table 1, concentrations of Cr, Ni, Co, Fe, and other elements are represented in percent by mass. As shown in Table 1, other added elements are Mo, W, C, P, S, Si, Mn, Nb, Cu, and N. A balance (Bal.) in the table signifies a principal component.

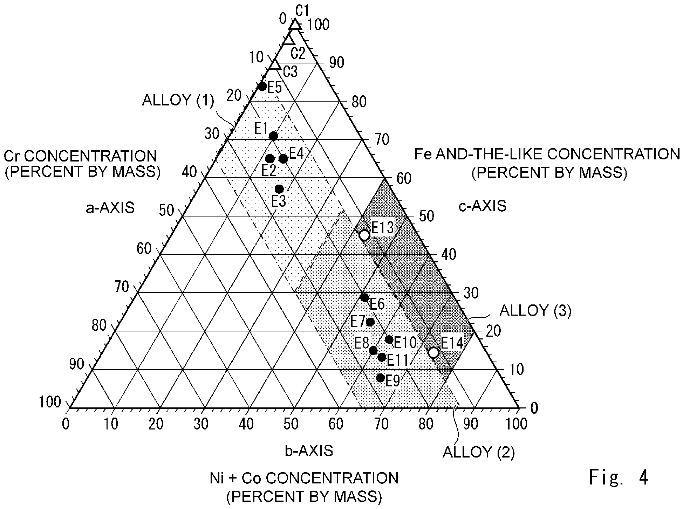

Fig. 4 is a ternary plot showing the compositions of the alloys according to Examples E1 to E13 and Comparative Examples C1 to C13. In Fig. 4, an a-axis represents a Cr concentration (percent by mass), a b-axis represents a Ni + Co concentration (percent by mass), and a c-axis represents a Fe and-the-like concentration (percent by mass).

Elements are similarly shown in Table 1 by being classified into Cr on the a-axis, Ni + Co on the b-axis, and Fe and the like on the c-axis.

As shown in Table 1, all of the alloys according to Examples E1 to E5 belong to alloy (1) of which a principal component is Fe, which contains 13 to 35 percent by mass of Cr, and which contains a total of 0 to 35 percent by mass of Ni and Co. Fig. 4 also shows a composition area of alloy (1).

All of the alloys according to Examples E6 to E11 belong to alloy (2) of which a principal component is Ni or Co, which contains 13 to 35 percent by mass of Cr, and which contains a total of 35 to 87 percent by mass of Ni and Co. Fig. 4 also shows a composition area of alloy (2).

Both of the alloys according to Examples E12 and E13 belong to alloy (3) of which a principal component is Ni or Co, which contains less than 13 percent by mass of Cr, and which contains a total of 40 to 80 percent by mass of Ni and Co. Fig. 4 also shows a composition area of alloy (3).

**[Table 1]**

| | a-axis | b-axis | | c-axis | | | | | | | | | | |
|---|---|---|---|---|---|---|---|---|---|---|---|---|---|---|
| | Cr | Ni | Co | Fe | Mo | W | C | P | S | Si | Mn | Nb | Cu | N |
| E1 | 19.50 | 10.00 | 0 | Bal. | 0 | 0 | 0.05 | 0.01 | 0.01 | 1.30 | 1.00 | 0.10 | 3.00 | 0.20 |
| E2 | 23.00 | 12.00 | 0 | Bal. | 0 | 0 | 0.05 | 0.01 | 0.01 | 1.30 | 1.00 | 0.10 | 0 | 0.20 |
| E3 | 25.00 | 18.00 | 0 | Bal. | 0 | 1.50 | 0.05 | 0.01 | 0.01 | 1.30 | 1.00 | 0.10 | 1.25 | 0.20 |
| E4 | 20.00 | 15.00 | 0 | Bal. | 4.00 | 0 | 0.05 | 0.01 | 0.01 | 1.30 | 1.00 | 0.10 | 3.00 | 0.20 |
| E5 | 15.50 | 0.30 | 0 | Bal. | 0.30 | 1.50 | 0.05 | 0.01 | 0.01 | 1.30 | 1.00 | 0.10 | 1.25 | 0.20 |
| E6 | 20.00 | Bal. | 1.00 | 19.48 | 3.00 | 0 | 0.05 | 0.01 | 0.01 | 0.10 | 0.10 | 5.00 | 1.25 | 0 |
| E7 | 22.00 | Bal. | 1.00 | 4.00 | 12.00 | 0 | 0.05 | 0.01 | 0.01 | 0.10 | 0.10 | 4.00 | 1.00 | 0 |
| E8 | 25.00 | Bal. | 0 | 12.73 | 0 | 0 | 0.05 | 0.01 | 0.01 | 0.10 | 0.10 | 2.00 | 0 | 0 |
| E9 | 28.50 | 0 | Bal. | 0 | 0 | 5.00 | 1.00 | 0.01 | 0.01 | 0.10 | 0 | 0 | 0 | 0 |
| E10 | 20.00 | 8.50 | Bal. | 0 | 0 | 17.00 | 0.05 | 0.01 | 0.01 | 0.10 | 1.00 | 0 | 0 | 0 |
| E11 | 24.00 | 19.50 | Bal. | 0 | 0 | 12.00 | 0.05 | 0.01 | 0.01 | 0.50 | 1.00 | 0.10 | 0 | 0 |
| E12 | 12.00 | Bal. | 5.00 | 0 | 4.00 | 10.00 | 0.02 | 0.01 | 0.01 | 0.01 | 0.01 | 0.30 | 0 | 0 |
| E13 | 12.00 | Bal. | 5.00 | 0 | 25.00 | 20.00 | 0.02 | 0.01 | 0.01 | 0.01 | 0.01 | 0.30 | 0 | 0 |
| C1 | 0 | 0 | 0 | Bal. | 0 | 0 | 0.50 | 0.01 | 0.01 | 0.30 | 0.80 | 0 | 0 | 0 |
| C2 | 2.70 | 0.20 | 0 | Bal. | 0.30 | 0 | 0.20 | 0.01 | 0.01 | 0.30 | 0.80 | 0.10 | 0.15 | 0 |
| C3 | 10.00 | 0.30 | 0 | Bal. | 0.10 | 0.40 | 0.05 | 0.01 | 0.01 | 0.10 | 0.05 | 0.05 | 0.15 | 0 |

### <Test method and determination method>

A sulfidation corrosion test and a high-temperature tensile test were performed with respect to sixteen alloys according to Examples E1 to E13 and Comparative Examples C1 to C13 that are collectively shown in Table 1 described below.

With respect to the high-temperature tensile test, a "pass" was determined if a tensile strength at a test temperature of 800°C was 200 MPa or more and, with respect to the ferrous alloys according to Examples E1 to E5, no phase-changes occurred during an elevated temperature process.

In the sulfidation corrosion test, test pieces constituted of the alloys according to Examples E1 to E13 and Comparative Examples C1 to C3 were immersed and held in a molten salt heated to 850°C and subsequently furnace-cooled. In this case, a molten salt containing sodium sulfide (Na₂SO₄) and sodium chloride (NaCl) at a molar ratio of 1:1 was used.

In order to prevent bumping of the molten salt and to achieve temperature uniformization, a rate of temperature increase when heating the molten salt is preferably set lower as the temperature rises. Therefore, the rate of temperature increase of the molten salt was set to 10°C/min up to 500°C, 5°C/min from 500 to 550°C, 2.5°C/min from 550 to 650°C, and 1°C/min from 650 to 850°C.

As a result of the sulfidation corrosion test, a "pass" was determined if an amount of erosion on a cross section of the test piece was 0.05 mm or less. The amount of erosion is preferably 0.01 mm or less and a state where a surface retains a metallic luster is preferable. The amount of erosion does not represent a thickness of a corrosion product but represents an interval between a surface of a test piece prior to the sulfidation corrosion test and a boundary surface between the corrosion product and a bulk after the sulfidation corrosion test.

### <Test results>

The alloys according to Examples E1 to E11 passed both the high-temperature tensile test and the sulfidation corrosion test.

The alloys according to Examples E12 and E13 passed the high-temperature tensile test but failed the sulfidation corrosion test. However, when a coating film made of a 1 mm-thick alumina film was formed on surfaces of the alloys according to Examples E12 and E13, the alloys also passed the sulfidation corrosion test.

On the other hand, the alloys according to Comparative examples C1 to C3 failed both the high-temperature tensile test and the sulfidation corrosion test. A phase-change was verified during temperature rise in the high-temperature tensile test.

From the experimental results described above, it was found that by constructing components used in a reactor from any of the alloys (1) to (3) described above, the reactor can withstand a severe use environment at a temperature of 300°C or higher and in an atmosphere containing sulfur compounds.

### <Second example>

Hereinafter, characteristics of an alloy used in, for example, the high-temperature reactor 10 according to the first embodiment will be described using comparative examples and examples. However, it is to be understood that the alloy used in the high-temperature reactor 10 according to the first embodiment is not solely limited to the following examples.

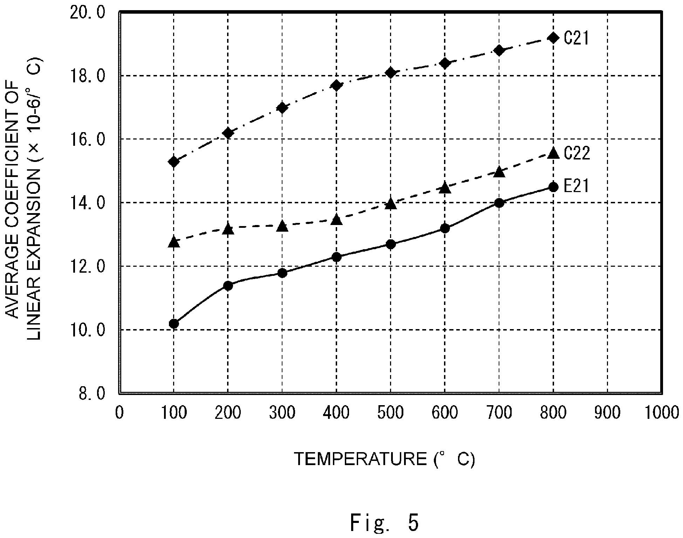

Fig. 5 is a graph showing temperature dependence of rates of thermal expansion (coefficients of linear expansion) of alloys according to Comparative Examples C21 and C22 and Example E21. An axis of abscissa represents temperature (°C) and an axis of ordinate represents a coefficient of linear expansion (× 10⁻⁶/°C).

As shown in Fig. 5, with respect to the alloys according to Comparative Examples C21 and C22 and Example E21, average coefficients of linear expansion (× 10⁻⁶/°C) at 100°C, 200°C, 300°C, 400°C, 500°C, 600°C, 700°C, and 800°C were measured using a pushrod type thermodilatometer.

In Fig. 5, the alloy according to Comparative Example C21 is an SUS316 alloy and the alloy according to Comparative Example C22 is an Inconel (registered trademark) 625 alloy.

The alloy according to Example E21 is an Ni-based superalloy with a composition of Ni-10Co-12Cr-10W-4Mo-1Al (numerical values represent percent by mass). In other words, the present alloy is an alloy which belongs to alloy (3) and which further contains 10 percent by mass of W.

As shown in Fig. 5, at each temperature, average coefficients of linear expansion decreased in an order of the Comparative Example C21, the Comparative Example C22, and the Example E21. In other words, the average coefficient of linear expansion of the alloy according to the Example E21 was smallest at each temperature. The average coefficient of linear expansion of a ceramic such as alumina that constitutes the ceramic film to be formed on a surface is even smaller than that of the alloy according to the Example E21. Therefore, a difference in the rate of thermal expansion (coefficient of linear expansion) between the alloy and the ceramic is smallest in the Example E21.

From the experimental results described above, it was found that constructing components used in a reactor from an alloy which belongs to the alloy (2) or the alloy (3) described above and which further contains 5 to 20 percent by mass of W enables cracking of the ceramic film formed on a surface to be suppressed.

The present invention is not limited to the embodiments described above and can be appropriately modified without deviating from the scope and spirit of the disclosure.

The present application claims priority on the basis of Japanese Patent Application No. 2022-043883 filed on March 18, 2022, the entire contents of which are incorporated herein by reference.

### Reference Signs List

10, 20, 30 HIGH-TEMPERATURE REACTOR
100 CYLINDER
101 BODY PART
102 SUPPLY PORT
103 DISCHARGE PORT
105 CONTACT AREA
106 CYLINDER GEAR
110 HEATING APPARATUS
120 SCREW
121 SHAFT
122 SCREW FLIGHT
123 STIRRER
124 PULVERIZER
125 SPRAY
125A FLUID INTRODUCTION PORT
125B FLUID INJECTION PORT
140 FEEDER
141 FEEDING PORT
150 KILN FOOT
151 PRODUCT DISCHARGE PORT
160 FLUID SUPPLYING APPARATUS
161 FLUID SUPPLY PIPE
162 FLUID SUPPLY PORT
170 FLUID DISCHARGING APPARATUS
171 FLUID DISCHARGE PIPE
172 FLUID DISCHARGE PORT
C10 CENTRAL AXIS
MG1, MG2 DRIVE GEAR
MT1, MT2 DRIVE APPARATUS
R10 MATERIAL TO BE TREATED
R11 PRODUCT
RZ1 FIRST REACTION ZONE
RZ2 SECOND REACTION ZONE
SG SCREW GEAR

## Claims

1. A reactor component to be used in a reactor configured to react a material to be treated at a temperature equal to or higher than 300°C, wherein
the reactor is configured to react the material to be treated in an environment where at least one of the material to be treated and an atmosphere contains sulfur or sulfide, and
the reactor component is constituted of an alloy of which a principal component is Fe, which contains 13 to 35 percent by mass of Cr, and which contains a total of 0 to 35 percent by mass of Ni and Co.

2. A reactor component to be used in a reactor configured to react a material to be treated at a temperature equal to or higher than 300°C, wherein
the reactor is configured to react the material to be treated in an environment where at least one of the material to be treated and an atmosphere contains sulfur or sulfide, and
the reactor component is constituted of an alloy of which a principal component is Ni or Co, which contains 13 to 35 percent by mass of Cr, and which contains a total of 35 to 87 percent by mass of Ni and Co.

3. A reactor component to be used in a reactor configured to react a material to be treated at a temperature equal to or higher than 300°C, wherein
the reactor is configured to react the material to be treated in an environment where at least one of the material to be treated and an atmosphere contains sulfur or sulfide,
the reactor component is constituted of an alloy of which a principal component is Ni or Co, which contains less than 13 percent by mass of Cr, and which contains a total of 40 to 80 percent by mass of Ni and Co, and
a coating film is formed on a surface of the alloy.

4. The reactor component according to claim 3, wherein the coating film is a ceramic film.

5. The reactor component according to claim 4, wherein the ceramic film has a thickness of 0.01 to 5 mm.

6. The reactor component according to claim 3, wherein the coating film is a metal plating film.

7. The reactor component according to any one of claims 1 to 6, wherein the alloy contains one or more selected from the group consisting of W, Mo, Al, C, B, Si, Ti, Nb, Y, Hf, Zr, Ta, and Mn.

8. The reactor component according to any one of claims 1 to 6, wherein the reactor component is a cylinder to which the material to be treated is supplied.

9. The reactor component according to claim 8, wherein the cylinder is configured to convey the material to be treated by rotating.

10. The reactor component according to any one of claims 1 to 6, wherein the reactor component is a screw configured to convey the material to be treated by rotating.

11. A reactor, comprising:
a cylinder to which a material to be treated is supplied; and
a heating apparatus configured to heat the cylinder,
the reactor being configured to react the material to be treated at a high temperature equal to or higher than 300°C, wherein
the reactor is configured to react the material to be treated in an environment where at least one of the material to be treated and an atmosphere contains sulfur or sulfide, and
the cylinder is constituted of an alloy of which a principal component is Fe, which contains 13 to 35 percent by mass of Cr, and which contains a total of 0 to 35 percent by mass of Ni and Co.

12. A reactor, comprising:
a cylinder to which a material to be treated is supplied; and
a heating apparatus configured to heat the cylinder,
the reactor being configured to react the material to be treated at a high temperature equal to or higher than 300°C, wherein
the reactor is configured to react the material to be treated in an environment where at least one of the material to be treated and an atmosphere contains sulfur or sulfide, and
the cylinder is constituted of an alloy of which a principal component is Ni or Co, which contains 13 to 35 percent by mass of Cr, and which contains a total of 35 to 87 percent by mass of Ni and Co.

13. A reactor, comprising:
a cylinder to which a material to be treated is supplied; and
a heating apparatus configured to heat the cylinder,
the reactor being configured to react the material to be treated at a high temperature equal to or higher than 300°C, wherein
the reactor is configured to react the material to be treated in an environment where at least one of the material to be treated and an atmosphere contains sulfur or sulfide,
the cylinder is constituted of an alloy of which a principal component is Ni or Co, which contains less than 13 percent by mass of Cr, and which contains a total of 40 to 80 percent by mass of Ni and Co, and
a coating film is formed on a surface of the alloy.

14. The reactor according to claim 13, wherein the coating film is a ceramic film.

15. The reactor according to claim 14, wherein the ceramic film has a thickness of 0.01 to 5 mm.

16. The reactor according to claim 13, wherein the coating film is a metal plating film.

17. The reactor according to any one of claims 11 to 16, wherein the alloy contains one or more selected from the group consisting of W, Mo, Al, C, B, Si, Ti, Nb, Y, Hf, Zr, Ta, and Mn.
